# EUROPEAN PATENT APPLICATION

(11) **EP 2 412 956 A2**
(43) Date of publication of application: **01.02.2012**
(21) Application number: 10190597.4
(22) Date of filing: 10.11.2010
(51) Int. Cl.: F02D 41/02, F01N 3/023

(54) **Exhaust gas post processing system and control method thereof**

(30) Priority: 29.07.2010 KR 20100073453
(71) Applicant: HYUNDAI MOTOR COMPANY, Seoul (KR); KIA MOTORS CORPORATION, Seocho-gu, Seoul (KR)
(72) Inventor: Kwon, Choong Il, Uijeongbu-si (KR)
(74) Representative: Viering, Jentschura & Partner

(57) **Abstract**

An exhaust gas post processing method, may include detecting driving conditions of an engine, determining a ratio of soluble organic matter and carbon particles trapped in a diesel particulate filter according to the detected driving conditions, selecting a first predetermined temperature and a first maintain time for eliminating the soluble organic matter according to the ratio of the soluble organic matter and the carbon particles, and controlling a temperature of the diesel particulate filter according thereto, and eliminating the soluble organic matter by sustaining the first predetermined temperature for the first maintain time, selecting a second predetermined temperature for eliminating the carbon particles, and controlling a temperature of the diesel particulate filter according thereto.

## Description

### CROSS-REFERENCE TO RELATED APPLICATION

The present application claims priority to Korean Patent Application No. 10-2010-0073453 filed in the Korean Intellectual Property Office on July 29, 2010, the entire contents of which is incorporated herein for all purposes by this reference.

### BACKGROUND OF THE INVENTION

### Field of the Invention

The present invention relates to an exhaust gas post-processing system and the control method thereof. More particularly, the present invention relates to an exhaust gas post processing system for trapping PM (particulate matter) included in exhaust gas and eliminating it, and a control method thereof.

### Description of Related Art

Reducing harmful matter is an important problem in a diesel vehicle that generates a large amount of harmful exhaust gas. Particularly, it is necessary to reduce PM (particulate matter) caused by incomplete combustion of a fuel.

A variety of techniques have been introduced to reduce the PM, and they include using a DPF (diesel particulate filter) that traps the particulate matter within the exhaust gas and heating it to a temperature higher than the ignition point thereof to eliminate the trapped PM.

The DPF is effectively regenerated by a high temperature thereof while the engine is operated at a high RPM or in a high load condition. However the exhaust gas temperature needs to be forcibly raised so as to regenerate the DPF at a low RPM or in a low load condition.

Post fuel injection is therefore performed, and a DOC (diesel oxidation catalyst) disposed at an upstream side of the DPF bums the injected fuel to raise the temperature of the exhaust gas so as to regenerate the DPF.

The PM exhausted from the diesel engine includes an SOF (soluble organic fraction), sulfates, and soot (carbon), and the SOF includes unburned fuel or oil components from the engine.

Meanwhile, since the SOF includes the unburned fuel or the oil component, the SOF can accelerate the regeneration or the combustion of the DPF such that the temperature of the DPF is excessively raised or the DPF is damaged by the combustion heat.

The information disclosed in this Background of the Invention section is only for enhancement of understanding of the general background of the invention and should not be taken as an acknowledgement or any form of suggestion that this information forms the prior art already known to a person skilled in the art.

### BRIEF SUMMARY OF THE INVENTION

Various aspects of the present invention are directed to provide an exhaust gas post processing method having advantages of variably controlling a regeneration temperature so as to firstly combust a soluble organic fraction and then eliminate PM (particulate matter) according to driving conditions.

In an aspect of the present invention, the exhaust gas post processing method, may include detecting driving conditions of an engine, determining a ratio of soluble organic matter and carbon particles trapped in a diesel particulate filter according to the detected driving conditions, selecting a first predetermined temperature and a first maintain time for eliminating the soluble organic matter according to the ratio of the soluble organic matter and the carbon particles, and controlling a temperature of the diesel particulate filter according thereto, and eliminating the soluble organic matter by sustaining the first predetermined temperature for the first maintain time, selecting a second predetermined temperature for eliminating the carbon particles, and controlling a temperature of the diesel particulate filter according thereto.

The exhaust gas post may further include determining regeneration timing of the diesel particulate filter based on the detected driving conditions.

The regeneration timing may be determined based on pressure difference and travel distance.

The exhaust gas post processing method may further include using a front/rear pressure difference of the diesel particulate filter to determine a regeneration ending time.

The exhaust gas post processing method may further include raising the temperature of the diesel particulate filter to the second predetermined temperature to eliminate the carbon particles.

The driving conditions of the engine may include engine speed, fuel injection amount, a front/rear pressure difference of the diesel particulate filter, internal temperature of the diesel particulate filter, or exhaust gas temperature.

The ratio of the soluble organic matter and the carbon particles trapped in the diesel particulate filter may be selected from map data according to the detected driving conditions.

The map data may include a relationship between the rotation speed and fuel injection amount of the engine.

The detected driving conditions may have a map of internal temperature according to engine speed and load (fuel injection amount) during the regeneration of the diesel particulate filter.

The detected driving conditions may have an elimination rate map of the soluble organic matter (SOF) according to engine speed and load (fuel injection amount).

In another aspect of the present invention, the exhaust gas post processing system, may include a diesel particulate filter trapping PM (particulate matter) that may be included in exhaust gas of an engine, and a control portion that performs a predetermined program so as to eliminate the PM trapped in the diesel particulate filter according to driving conditions of the engine, wherein the predetermined program may include instructions for performing the exhaust gas post processing method mentioned above.

As stated above, in the exhaust gas post processing method according to the present invention, the soluble organic fraction is firstly burned to be eliminated at a lower temperature and then the PM is burned at a high temperature such that the DPF is not raised to an excessively high temperature, durability is improved, and damage is prevented.

The methods and apparatuses of the present invention have other features and advantages which will be apparent from or are set forth in more detail in the accompanying drawings, which are incorporated herein, and the following Detailed Description of the Invention, which together serve to explain certain principles of the present invention.

### BRIEF DESCRIPTION OF THE DRAWINGS

FIG. 1 is a schematic diagram of an exhaust gas post processing system according to an exemplary embodiment of the present invention.

FIG. 2A, FIG. 2B, FIG. 2C, and FIG. 2D are graphs showing data stored in a map according to driving conditions of an engine so as to perform an exhaust gas post processing method according to an exemplary embodiment of the present invention.

FIG. 3 is a graph showing time and temperature for performing an exhaust gas post processing method according to an exemplary embodiment of the present invention.

FIG. 4 is a flowchart for performing an exhaust gas post processing method according to an exemplary embodiment of the present invention.

It should be understood that the appended drawings are not necessarily to scale, presenting a somewhat simplified representation of various features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

### DETAILED DESCRIPTION OF THE INVENTION

Reference will now be made in detail to various embodiments of the present invention(s), examples of which are illustrated in the accompanying drawings and described below. While the invention(s) will be described in conjunction with exemplary embodiments, it will be understood that present description is not intended to limit the invention(s) to those exemplary embodiments. On the contrary, the invention(s) is/are intended to cover not only the exemplary embodiments, but also various alternatives, modifications, equivalents and other embodiments, which may be included within the spirit and scope of the invention as defined by the appended claims.

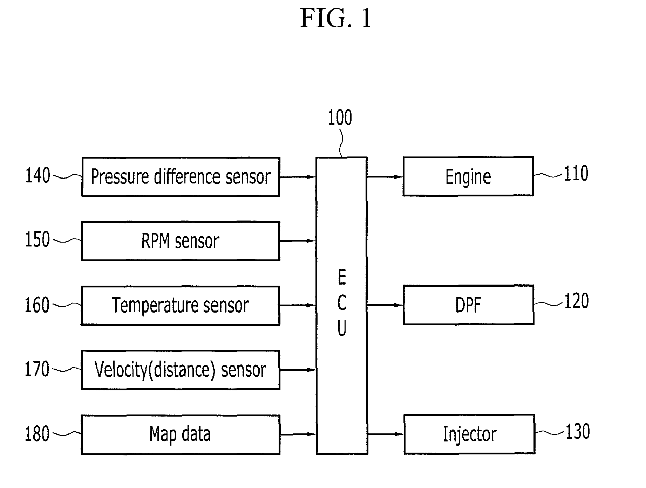

FIG. 1 is a schematic diagram of an exhaust gas post processing system according to an exemplary embodiment of the present invention.

Referring to FIG. 1, an exhaust gas post processing system includes an engine 110, a diesel particulate filter 120, an injector 130, a control portion 100, a pressure difference sensor 140, an RPM sensor 150, a temperature sensor 160, a speed sensor 170, and map data 180.

The PM (particulate matter) is included in the exhaust gas of the engine 110, and the PM includes an SOF (soluble organic fraction) and carbon particles (carbon or soot).

The pressure difference sensor 140 detects a front/rear pressure difference of the diesel particulate filter 120, and the control portion 100 controls the injector 130 based on the detected signal to raise the temperature of the diesel particulate filter 120 such that the trapped matter bums to be eliminated.

Meanwhile, a ratio of the soluble organic fraction and the carbon particles is selected from the map data 180 according to engine rotation speed, vehicle speed, travel distance, fuel injection amount, exhaust gas temperature, a trapped amount, a pressure difference, and temperature of the diesel particulate filter 120 of the engine 110 in an exemplary embodiment of the present invention, and the diesel particulate filter 120 is variably regenerated based on the selected ratio.

The control portion 100 can be realized by one or more processors activated by a predetermined program, and the predetermined program can be programmed to perform each step of all control methods that will be described later according to an exemplary embodiment of this invention.

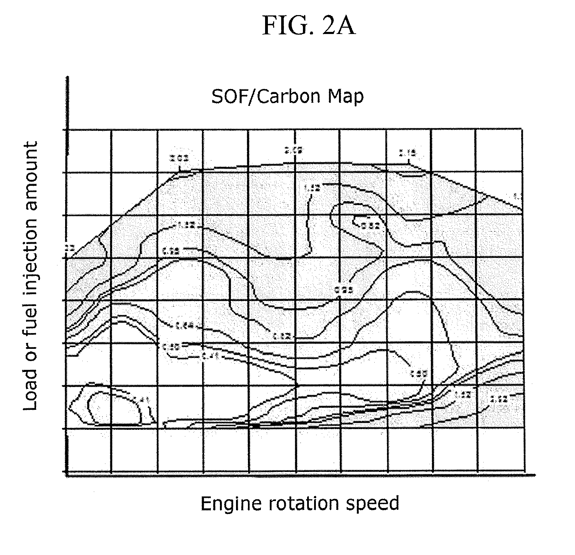

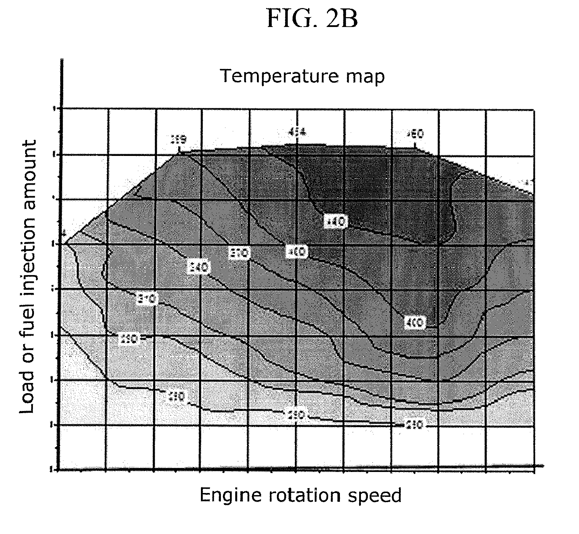

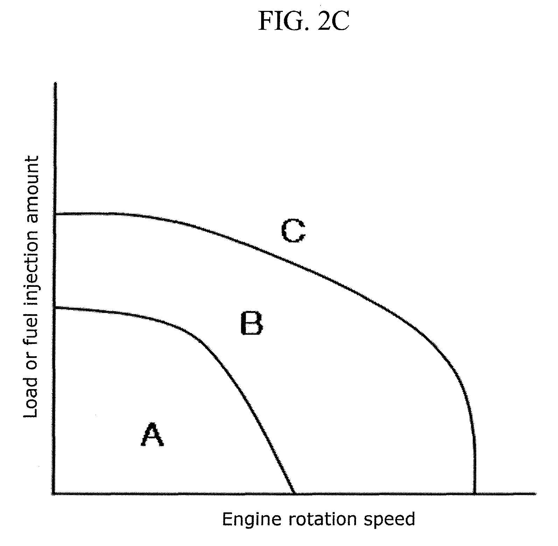

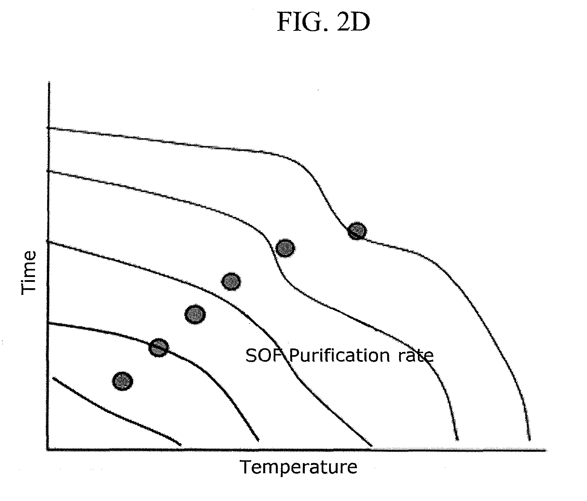

FIG. 2A, FIG. 2B, FIG. 2C, and FIG. 2D are graphs showing data stored in a map according to driving conditions of an engine so as to perform an exhaust gas post processing method according to an exemplary embodiment of the present invention.

Referring to FIG. 2A, the horizontal axis denotes rotation speed (RPM) of an engine, and the vertical axis denotes a load or a fuel injection amount.

Further, it shows a ratio of the soluble organic fraction and the carbon particles included in the PM trapped in the diesel particulate filter 120 according to the rotation speed and the fuel injection amount (load) of the engine.

Referring to FIG. 2B, the horizontal axis denotes rotation speed of the engine, and the vertical axis denotes a load or a fuel injection amount.

Further, it shows an internal temperature of the diesel particulate filter 120 according to the rotation speed and the fuel injection amount (load) of the engine. The internal temperature and the maintain time thereof are important factors for controlling the regeneration of the diesel particulate filter 120 in an exemplary embodiment of the present invention.

Referring to FIG. 2C, an elimination rate of the SOF (soluble organic fraction) according to the rotation speed and the fuel injection amount (load) of the engine are shown.

Referring to FIG. 2D, the horizontal axis denotes the internal temperature of the diesel particulate filter 120, the vertical axis denotes time, and it shows purification efficiency of the SOF according to the internal temperature of the DPF.

The ratio of the SOF and the carbon particle according to the driving conditions of the engine 110 is selected, the SOF is eliminated at a predetermined temperature for a predetermined time, and the carbon particles are eliminated at a predetermined temperature for a predetermined time based on the map data shown in the FIG. 2A, FIG. 2B, FIG. 2C, and FIG. 2D.

In an exemplary embodiment of the present invention, the SOF is burned in the diesel particulate filter 120 first, and then the carbon particles are burned to be eliminated so as to prevent the diesel particulate filter 120 from being excessively heated, enhance the durability, and prevent the damage thereof.

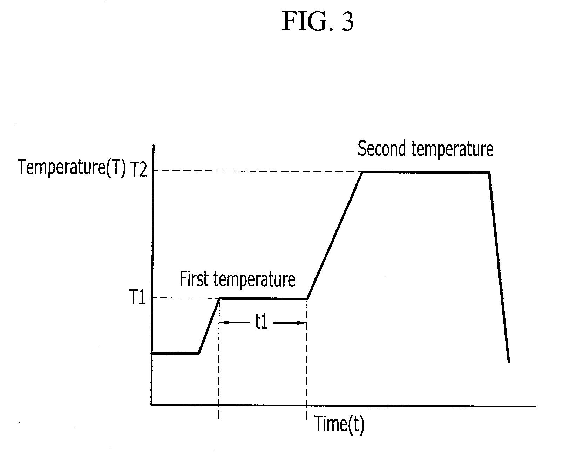

FIG. 3 is a graph showing time and temperature for performing an exhaust gas post processing method according to an exemplary embodiment of the present invention.

Referring to FIG. 3, the horizontal axis denotes time, and the vertical axis denotes the temperature of the diesel particulate filter 120.

The temperature of the diesel particulate filter 120 is raised to a predetermined temperature T1 and the raised temperature is maintained for a predetermined time t1 so as to eliminate the SOF first. Then the diesel particulate filter 120 is heated to a predetermined temperature T2 that is higher than the predetermined temperature T1 so as to eliminate the carbon particles remaining in the diesel particulate filter 120.

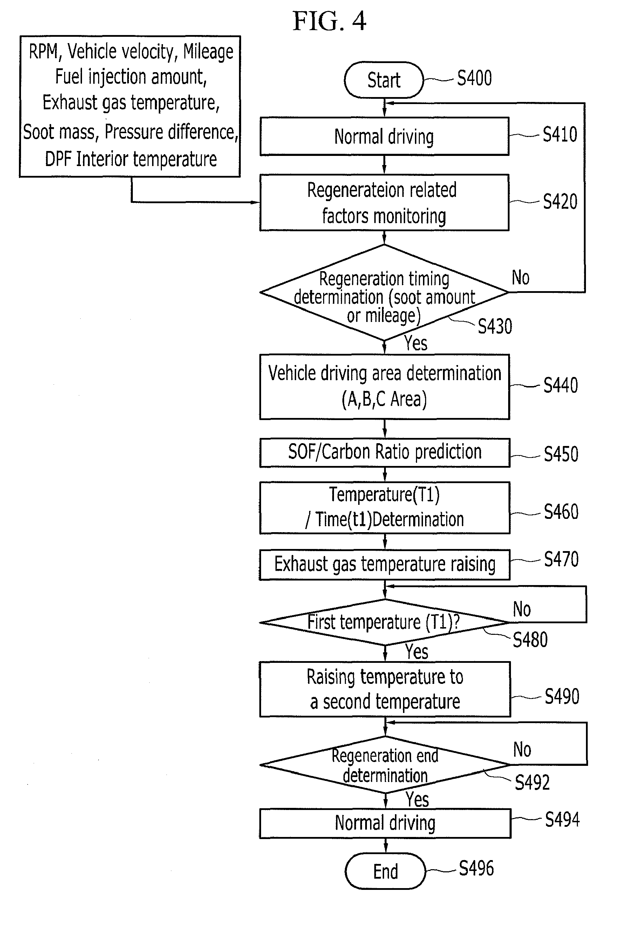

FIG. 4 is a flowchart for performing an exhaust gas post processing method according to an exemplary embodiment of the present invention.

Referring to FIG. 4, the engine 110 is started in step S400, and a vehicle (engine) is normally operated in step S410.

Variables for regenerating the diesel particulate filter 120 are detected in a S420, wherein the variables can be engine speed (RPM), vehicle speed, travel distance (mileage), fuel injection amount, exhaust gas temperature, a trapped particulate matter amount (soot or SOF), a front/rear pressure difference of the diesel particulate filter 120, and temperature of the diesel particulate filter.

Timing for regeneration is determined based on the pressure difference and the travel distance in step S430. In A, B, or C areas of FIG. 2C, one driving area to determine an elimination rate of the SOF is selected in step S440.

Further, the ratio of the SOF to the carbon particles is selected based on the driving conditions of the engine 110 in step S450, and the temperature T1 and the maintain time tl are determined for eliminating the SOF first in step S460.

The diesel particulate filter 120 is heated to a predetermined temperature determined in step S460 to eliminate the SOF trapped in the diesel particulate filter 120 first in step S470, and the diesel particulate filter 120 is heated to a predetermined high temperature T2 to eliminate the carbon particles in step S490.

A regeneration end time is determined by a front/rear pressure difference of the diesel particulate filter 120 in step S492, the engine returns to a normal driving condition in step S494, and the control comes to an end in step S496.

The foregoing descriptions of specific exemplary embodiments of the present invention have been presented for purposes of illustration and description. They are not intended to be exhaustive or to limit the invention to the precise forms disclosed, and obviously many modifications and variations are possible in light of the above teachings. The exemplary embodiments were chosen and described in order to explain certain principles of the invention and their practical application, to thereby enable others skilled in the art to make and utilize various exemplary embodiments of the present invention, as well as various alternatives and modifications thereof. It is intended that the scope of the invention be defined by the Claims appended hereto and their equivalents.

## Claims

1. An exhaust gas post processing method, comprising:
detecting driving conditions of an engine;
determining a ratio of soluble organic matter and carbon particles trapped in a diesel particulate filter according to the detected driving conditions;
selecting a first predetermined temperature and a first maintain time for eliminating the soluble organic matter according to the ratio of the soluble organic matter and the carbon particles, and controlling a temperature of the diesel particulate filter according thereto; and
eliminating the soluble organic matter by sustaining the first predetermined temperature for the first maintain time, selecting a second predetermined temperature for eliminating the carbon particles, and controlling a temperature of the diesel particulate filter according thereto.

2. The exhaust gas post processing method of claim 1, further comprising determining regeneration timing of the diesel particulate filter based on the detected driving conditions.

3. The exhaust gas post processing method of claim 2, wherein the regeneration timing is determined based on pressure difference and travel distance.

4. The exhaust gas post processing method of claim 1, further comprising using a front/rear pressure difference of the diesel particulate filter to determine a regeneration ending time.

5. The exhaust gas post processing method of claim 1, further comprising raising the temperature of the diesel particulate filter to the second predetermined temperature to eliminate the carbon particles.

6. The exhaust gas post processing method of claim 1, wherein the driving conditions of the engine include engine speed, fuel injection amount, a front/rear pressure difference of the diesel particulate filter, internal temperature of the diesel particulate filter, or exhaust gas temperature.

7. The exhaust gas post processing method of claim 1, wherein the ratio of the soluble organic matter and the carbon particles trapped in the diesel particulate filter is selected from map data according to the detected driving conditions.

8. The exhaust gas post processing method of claim 7, wherein the map data includes a relationship between the rotation speed and fuel injection amount of the engine.

9. The exhaust gas post processing method of claim 1, wherein the detected driving conditions have a map of internal temperature according to engine speed and load (fuel injection amount) during the regeneration of the diesel particulate filter.

10. The exhaust gas post processing method of claim 1, wherein the detected driving conditions have an elimination rate map of the soluble organic matter (SOF) according to engine speed and load (fuel injection amount).

11. An exhaust gas post processing system, comprising:
a diesel particulate filter trapping PM (particulate matter) that is included in exhaust gas of an engine; and
a control portion that performs a predetermined program so as to eliminate the PM trapped in the diesel particulate filter according to driving conditions of the engine, wherein the predetermined program includes instructions for performing the method of claims 1 to 10 at least once.
